# EUROPÄISCHE PATENTSCHRIFT

(11) **EP 1 023 389 B1**
(45) Veröffentlichungstag und Bekanntmachung des Hinweises auf die Patenterteilung: **21.08.2002**
(21) Anmeldenummer: 98947534.8
(22) Anmeldetag: 18.09.1998
(51) Int. Cl.: C08L 23/16, C08L 23/06, C08L 23/04

(54) **POLYMERMISCHUNG MIT GUTER VERARBEITBARKEIT**
POLYMER MIXTURE WITH GOOD WORKABILITY
MELANGE POLYMERE PRESENTANT UNE BONNE APTITUDE A LA MISE EN OEUVRE

(30) Priorität: 11.10.1997 DE 19745047
(43) Veröffentlichungstag der Anmeldung: 02.08.2000
(73) Patentinhaber: Basell Polyolefine GmbH, 50389 Wesseling (DE)
(72) Erfinder: BAUER, Peter, D-67071 Ludwigshafen (DE); LUX, Martin, D-67125 Dannstadt-Schauernheim (DE); LILGE, Dieter, D-67117 Limburgerhof (DE); FALLER, Uwe, D-67277 Frankenthal (DE)
(86) Internationale Anmeldenummer: EP9805942
(87) Internationale Veröffentlichungsnummer: WO99019400

(56) Entgegenhaltungen:
- WO-A-94/06857

## Beschreibung

Gegenstand der vorliegenden Erfindung ist eine Polymermischung enthaltend mindestens 40 aber weniger als 85 Gew.-% eines Ethylencopolymeren (A), welches eine Dichte von 0,91 bis 0,93 g/cm³, einen HLMFR (190°C/21,6 kg) von 5 bis 60 g/10 min und eine Molmassenverteilung M_{w}/Mₙ ≤ 3 aufweist, und mehr als 15 aber höchstens 60 Gew.-% eines von dem Ethylencopolymeren (A) unterschiedlichen Ethylencopolymeren (B), welches eine Dichte von 0,93 bis 0,945 g/cm³, einen HLMFR (190°C/21,6 kg) von 8 bis 20 g/10 min und eine Molmassenverteilung M_{w}/Mₙ ≥ 7 aufweist, wobei die Gewichtsprozente jeweils bezogen sind auf die Gesamtmasse der Komponenten (A) und (B).

Weiterhin betrifft die Erfindung die Verwendung dieser Polymermischung zur Herstellung von Folien, ein Verfahren zur Herstellung von Folien, bei dem man eine solche Polymermischung einsetzt, sowie Folien, welche aus einer solchen Polymermischung hergestellt wurden.

Ethylencopolymere mit enger Molmassenverteilung, wie sie beispielsweise durch Metallocenkatalyse erhalten werden können. zeichnen sich durch besonders vorteilhafte mechanische Eigenschaften aus. Ihre Verarbeitbarkeit ist dagegen in vielen Fällen unbefriedigend. Es wurden daher in der Vergangenheit zahlreiche Versuche unternommen, die Verarbeitbarkeit zu verbessern, ohne dabei die mechanischen Eigenschaften zu sehr zu beeinträchtigen.

LDPE, wie es durch radikalische Hochdruckpolymerisation erhalten wird, zeigt ein zu diesen Ethylencopolymeren in vieler Hinsicht komplementäres Verhalten: LDPE ist sehr gut zu verarbeiten, zeigt aber schlechtere mechanische Eigenschaften. Aus diesem Grund wurden Versuche unternommen, durch Metallocen-Katalyse hergestellte Ethylencopolymere mit LDPE zu vermischen. Solche Polymermischungen werden beispielsweise in WO 95/27005 beschrieben.

In EP-B-0 662 989 werden ebenfalls Blends von Metallocen-Copolymeren mit LDPE sowie anderen Ethylencopolymeren beschrieben. Die Metallocen-LLDPE-Komponente besitzt eine Dichte unter 0,92 g/cm³. Als Zumischkomponenten werden neben LDPE auch LLDPE und VLDPE genannt. Diese Zumischkomponente muß einen um wenigstens 10°C höheren Schmelzpunkt als die Metallocenkomponente und eine Orientierungstemperatur, die mindestens 2°C unter ihrem Schmelzpunkt liegt, aufweisen. An die Molmassenverteilung der zweiten Komponente werden keine besonderen Anforderungen gestellt.

In WO90/03414 werden Mischungen aus verschiedenen Ethylencopolymeren beschrieben, wobei die Mischungskomponenten entweder gleiche Molmasse und unterschiedlichen Comonomerengehalt oder gleiche Comonomerengehalte und unterschiedliche Molmasse oder Comonomerengehalte, die mit der Molmasse ansteigen, aufweisen. Alle Mischungsbestandteile haben jedoch eine enge Molmassenverteilung M_{w}/Mₙ von ≤ 3.

Die bekannten Ethylencopolymer-Mischungen lassen hinsichtlich der Kombination von guten mechanischen Eigenschaften und guter Verarbeitbarkeit noch zu wünschen übrig.

Der Erfindung lag daher die Aufgabe zugrunde, Polymermischungen auf Basis von Ethylencopolymeren bereitzustellen, die gute mechanische Eigenschaften mit guter Verarbeitbarkeit vereinen und besonders zur Herstellung von Folien geeignet sind.

Demgemäß wurden die eingangs beschriebenen Polymermischungen, ihre Verwendung zur Herstellung von Folien, ein Verfahren zur Herstellung von Folien, bei welchem man eine solche Polymermischung einsetzt, sowie Folien, die aus einer solchen Polymermischung hergestellt werden, gefunden.

Der Ausdruck "HLMFR" steht im Rahmen dieser Erfindung in bekannter Weise für "High Load Melt Flow Rate" und wird stets bei 190°C unter einer Last von 21,6 kg (190°C/21,6 kg) ermittelt.

Die erfindungsgemäßen Polymermischungen enthalten als wesentliche Komponenten die Ethylencopolymere (A) und (B).

Das erfindungsgemäß einzusetzende Ethylencopolymere (A) hat eine Dichte im Bereich von 0,91 bis 0,93 g/cm³, vorzugsweise zwischen 0,915 und 0,925 g/cm³ und ein Molmassenverteilung M_{w}/Mₙ von ≤3. Sein HLMFR liegt im Bereich von 5 bis 60 g/10 min, vorzugsweise zwischen 10 und 40 g/10 min.

Als Comonomere, welche neben Ethylen in dem Copolymer (A) einzeln oder im Gemisch miteinander einpolymerisiert enthalten sein können, kommen alle α-Olefine mit 3 bis 8 C-Atomen in Betracht, wie z.B. Propen, Buten, Penten, Hexen, 4-Methyl-Penten, Hepten und Octen. Vorzugsweise enthält Copolymer (A) als Comonomereinheit Penten, Hexen, 4-Methyl-Penten oder Octen einpolymerisiert. Besonders bevorzugt ist Hexen. Die Comonomeren sind in dem Ethylencopolymeren (A) in aller Regel in Mengen von 1 bis 20 Gew.-%, vorzugsweise von 2 bis 15 Gew.-% und insbesondere von 2 bis 8 Gew.-%, jeweils bezogen auf das Ethylencopolymere (A), einpolymerisiert enthalten. Das gleiche gilt für die Comonomeren, die in Copolymer (B) einpolymerisiert enthalten sind.

Der Anteil des Ethylencopolymeren (A) an der Gesamtmasse der Ethylencopolymeren (A) und (B) in der erfindungsgemäßen Polymermischung beträgt mindestens 40, jedoch weniger als 85 Gew.-%, vorzugsweise zwischen 50 und 80 Gew.-%.

Die Ethylencopolymere (A) können prinzipiell mit jedem Katalysator oder Katalysatorsystem hergestellt werden, der oder das zu Produkten mit der erforderlichen engen Molmassenverteilung führt. In der Regel sind diese Katalysatoren sogenannte Single-Site-Katalysatoren, beispielsweise Metallocenkatalysatoren, Katalysatoren mit Azaallyl- oder β-Diketiminatliganden oder Katalysatoren auf Basis von Pd oder Ni mit substituierten Diazabutadienliganden.

Bevorzugt sind Polymermischungen, in denen als Ethylencopolymer (A) ein durch Metallocenkatalyse hergestelltes Ethylen-α-Olefincopolymer enthalten ist.

Die Polymerisation kann dabei z.B. in der Gasphase, in Suspension, in Lösung oder im Hochdruckprozeß erfolgen, wobei in Suspensions- oder Gasphasenverfahren als Katalysatorsystem vorzugsweise ein solches verwendet wird, das
a) einen anorganischen oder organischen Träger,
b) einen Metallocenkomplex und
c) eine metalloceniumionenbildende Verbindung enthält.

Als Trägermaterialien a) werden vorzugsweise feinteilige Träger eingesetzt, die bevorzugt einen Teilchendurchmesser im Bereich von 1 bis 300 µm aufweisen, insbesondere von 30 bis 70 µm. Geeignete anorganische Träger sind beispielsweise Magnesiumchlorid oder Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace. Als organische Träger sind beispielsweise feinteilige Polyolefine geeignet, z.B. feinteiliges Polypropylen.

Die Menge an Träger a) beträgt vorzugsweise 50 bis 99,9 Gew.-%, bezogen auf die Gesamtmasse von Träger a) und Metallocenkomplex (Komponente b).

Als Metallocenkomplexe b) eignen sich besonders solche der allgemeinen Formel I 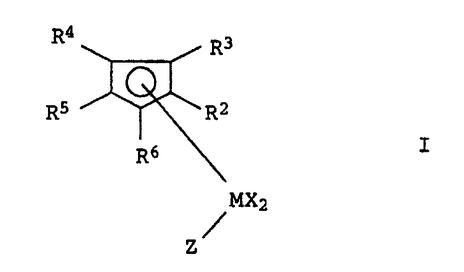 in der die Substituenten folgende Bedeutung haben:
- M: Titan, Zirkonium, Hafnium, Vanadium, Niob oder Tantal, insbesondere Zirkonium.
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁷ oder -NR⁷R⁸,
wobei
- R⁷ und R⁸: gleich oder verschieden sein können und unabhängig von einander C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R² bis R⁶: gleich oder verschieden Wasserstoff, C₁- bis-C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁹)₃ mit
- R⁹: C₁- bis C₁₀-Alkyl, C₃- bis C₁₀-Cycloalkyl oder C₆- bis C₁₅-Aryl,
- Z: für X oder 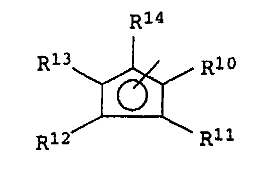 steht,
wobei die Reste
- R¹⁰ bis R¹⁴: gleich oder verschieden Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁵)₃ mit
- R¹⁵: C₁- bis C₁₀-Alkyl, C₆- bis C₁₅-Aryl oder C₃- bis C₁₀-Cycloalkyl,
oder wobei die Reste R⁵ und Z gemeinsam eine Gruppierung -R¹⁶-A¹bilden, in der
- R¹⁶: 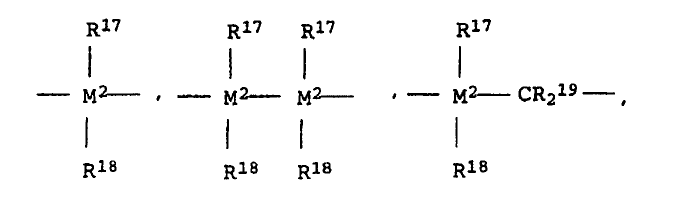 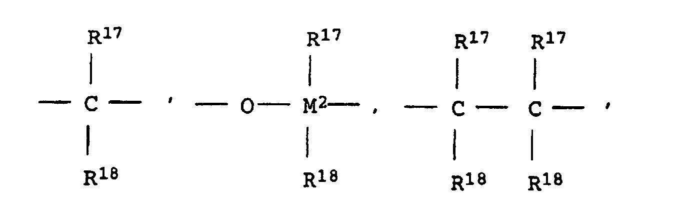
= BR¹⁷, = AlR¹⁷, -Ge-, -Sn-, -O-, -S-, = SO, = SO₂, = NR¹⁷, = CO, = PR¹⁷ oder = P(O)R¹⁷ ist,
wobei
- R¹⁷, R¹⁸ und R¹⁹: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M²: Silicium, Germanium oder Zinn ist,
- A¹: 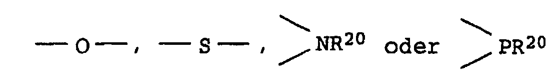 bedeuten,
mit
- R²⁰: C₁- bis C₁₀-Alkyl, C₆- bis C₁₅-Aryl, C₃- bis C₁₀-Cycloalkyl, Alkylaryl oder Si(R²¹)₃,
- R²¹: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁵ und R¹³ gemeinsam eine Gruppierung -R¹⁶bilden.

Von den Metallocenkomplexen b) der allgemeinen Formel I sind 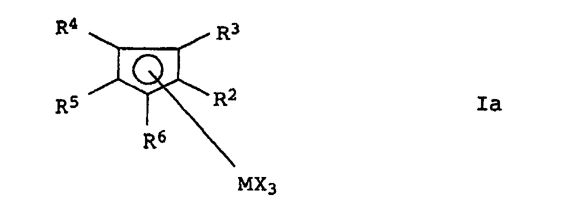 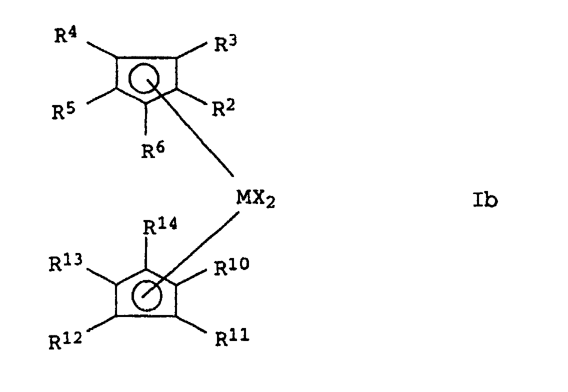 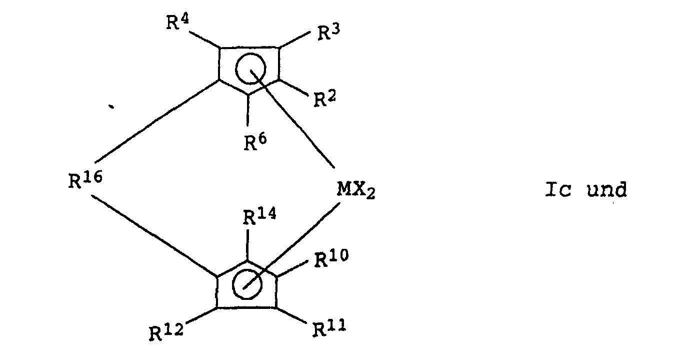 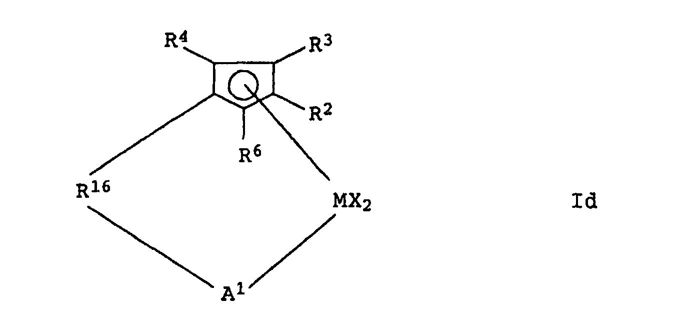 bevorzugt.

Besonders bevorzugt sind solche Übergangsmetallkomplexe, welche zwei aromatische Ringsysteme als Liganden enthalten, also besonders die Übergangsmetallkomplexe der allgemeinen Formel Ib oder Ic.

Die Reste X können gleich oder verschieden sein, bevorzugt sind sie gleich.

Von den Verbindungen der Formel Ia sind insbesondere diejenigen bevorzugt, in denen
- M: Titan, Zirkonium oder Hafnium,
- X: Chlor, C₁-bis C₄-Alkyl oder Phenyl und
- R² bis R⁶: Wasserstoff oder C₁- bis C₄-Alkyl bedeuten.

Von den Verbindungen der Formel Ib sind als bevorzugt diejenigen zu nennen, bei denen
- M: für Titan, Zirkonium oder Hafnium steht,
- X: für Chlor, C₁-bis C₄-Alkyl oder Phenyl,
- R² bis R⁶: Wasserstoff, C₁- bis C₄-Alkyl oder Si(R⁹)₃,
- R¹⁰ bis R¹⁴: Wasserstoff, C₁- bis C₄-Alkyl oder Si(R¹⁵)₃ bedeuten.

Insbesondere sind die Verbindungen der Formel Ib geeignet, in denen die Cyclopentadienylreste gleich sind.

Beispiele für besonders geeignete Verbindungen der Formel Ib sind u.a.:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid
sowie die entsprechenden Dimethylzirkoniumverbindungen.

Von den Verbindungen der Formel Ic sind diejenigen besonders geeignet, in denen
- R² und R¹⁰: gleich sind und für Wasserstoff oder C₁- bis C₁₀-Alkylgruppen stehen,
- R⁶ und R¹⁴: gleich sind und für Wasserstoff, eine Methyl-, Ethyl-, iso-Propyl- oder tert.-Butylgruppe stehen
- R³, R⁴, R¹¹ und R¹²: die Bedeutung R⁴ und R¹² C₁- bis C₄-Alkyl R³ und R¹¹ Wasserstoff haben oder zwei benachbarte Reste R³ und R⁴ sowie R¹¹ und R¹² gemeinsam für 4 bis 12 C-Atome aufweisende cyclische Gruppen stehen,
- R¹⁶: für 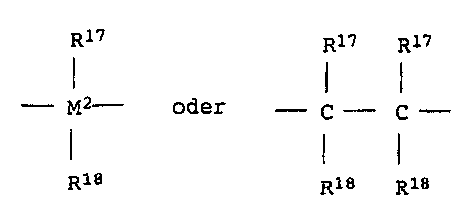 steht,
- M: für Titan, Zirkonium oder Hafnium und
- X: für Chlor, C₁-bis C₄-Alkyl oder Phenyl stehen.

Beispiele für besonders geeignete Komplexverbindungen der Formel Ic sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-methylbenzindenyl)-zirkoniumdichlorid Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis(2-methylbenzindenyl)zirkoniumdichlorid,
Diphenylsilandiylbis(2-methylbenzindenyl)zirkoniumdichlorid,
Diphenylsilandiylbis(2-ethylbenzindenyl)zirkoniumdichlorid, und
Dimethylsilandiylbis(-2-methylindenyl)-hafniumdichlorid sowie die entsprechenden Dimethylzirkoniumverbindungen.

Bei den Verbindungen der allgemeinen Formel Id sind als besonders geeignet diejenigen zu nennen, in denen
- M: für Titan oder Zirkonium,
- X: für Chlor, C₁-bis C₄-Alkyl oder Phenyl stehen,

- R¹⁶: für 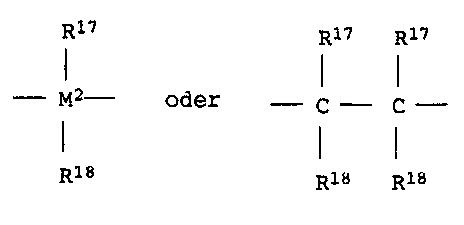 steht,
- A¹: für ―O―, ―S― oder 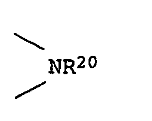
und
- R² bis R⁴ und R⁶: für Wasserstoff, C₁- bis C₁₀-Alkyl, C₃- bis C₁₀-Cycloalkyl, C₆- bis C₁₅-Aryl oder Si(R⁹)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe b) eingesetzt werden.

Geeignete metalloceniumionen-bildende Verbindungen c) sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel II

M³X¹X²X³ II

bevorzugt, in der
- M³: ein Element der III. Hauptgruppe des Periodensystems bedeutet, insbesondere B, Al oder Ga, vorzugsweise B,
- X¹, X² und X³: für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel II, in der X¹, X² und X³ gleich sind, vorzugsweise Tris(pentafluorphenyl)boran.

Als ionische Verbindungen mit lewissauren Kationen sind Verbindungen der allgemeinen Formel III

[(Y^{a+})Q₁Q₂...Q_{z}]^{d+} III

geeignet, in denen
- Y: ein Element der I. bis VI. Hauptgruppe oder der I. bis VIII. Nebengruppe des Periodensystems bedeutet.
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Besonders geeignet als metalloceniumionen-bildende Verbindung c) sind offenkettige oder cyclische Alumoxanverbindungen der allgemeinen Formel IV oder V 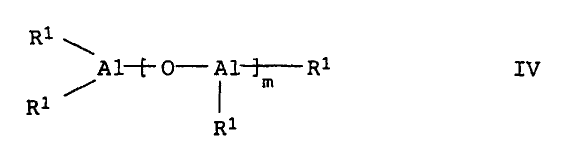 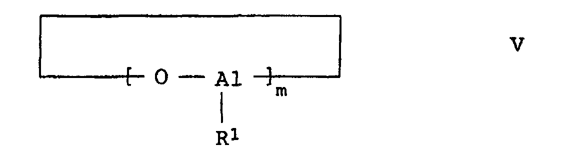 wobei
- R¹: eine C₁- bis C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Weiterhin können als metalloceniumionen-bildende Verbindungen c) Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen davon eingesetzt werden.

Das in den erfindungsgemäßen Polymermischungen enthaltene Ethylencopolymere (B) hat im Gegensatz zum Ethylencopolymeren (A) eine breitere Molmassenverteilung M_{w}/Mₙ von ≥ 7. Die Dichte des Ethylencopolymeren (B) liegt im Bereich von 0,93 bis 0,945 g/cm³, vorzugsweise zwischen 0,932 und 0,940 g/cm³. Der HLMFR dieser Komponente liegt im Bereich von 8 bis 20 g/10 min, vorzugsweise zwischen 10 und 15 g/10 min.

Für die Comonomeren, die neben dem Ethylen in dem erfindungsgemäß einzusetzenden Ethylencopolymeren (B) einpolymerisiert enthalten sein können, gilt das für die Comonomeren des Ethylencopolymerisats (A) Gesagte, und zwar sowohl bezüglich der Art der Comonomeren als auch bezüglich der Menge, in der diese in dem Copolymeren einpolymerisiert enthalten sind.

Der Anteil des Ethylencopolymeren (B) an der Gesamtmasse der Ethylencopolymeren (A) und (B) in den erfindungsgemäßen Polymermischungen beträgt mehr als 15, höchstens jedoch 60 Gew.-%, vorzugsweise zwischen 20 und 50 Gew.-%.

Die Ethylencopolymere (B) können mit verschiedenen Katalysatoren hergestellt werden. Auch sind verschiedene Polymerisationsverfahren, also beispielsweise Gasphasen-, Lösungs- oder Suspensionsverfahren, geeignet, die Ethylencopolymere (B) herzustellen. Vorzugsweise werden auch die Ethylencopolymere (B) in Suspensionsoder Gasphasenpolymerisationsverfahren, besonders im Wirbelschichtverfahren, hergestellt. Als Katalysatorsysteme eignen sich dabei insbesondere Ziegler- oder Phillipskatalysatorsysteme, wie sie dem Fachmann allgemein bekannt sind.

Bevorzugt sind erfindungsgemäß solche Polymermischungen, in welchen als Ethylencopolymer (B) ein mit Hilfe eines geträgerten Chromkatalysators hergestelltes Ethylen-α-Olefin-copolymer enthalten ist. Derartige Katalysatorsysteme sind beispielsweise in US-A-2825721, EP-B-589350 und EP-B-537590 beschrieben.

Die erfindungsgemäßen Polymermischungen, die im wesentlichen aus den Ethylencopolymeren (A) und (B) bestehen, haben vorzugsweise eine Molmassenverteilung M_{w}/Mₙ von 3 bis 7.

Insbesondere sind solche Polymermischungen bevorzugt, die ferner eine Molmassenverteilung M_{z}/M_{w} aufweisen, deren Wert gleich oder größer dem Wert (M_{w}/Mₙ) x 1,1 ist. Im allgemeinen liegt dieser Wert M_{z}/M_{w} zwischen 3,5 und 8.

Neben den Ethylencopolymeren (A) und (B) können die erfindungsgemäßen Polymermischungen noch an sich bekannte Hilfs- und/oder Zusatzstoffe enthalten, wie Verarbeitungsstabilisatoren, Stabilisatoren gegen Licht- und Wärmeeinflüsse, übliche Folienadditive wie Gleitmittel, Antiblockmittel und Antistatika, sowie gegebenenfalls Farbstoffe. Art und Menge dieser Zusatzstoffe sind dem Fachmann geläufig.

Weiterhin hat sich herausgestellt, daß Beimischungen geringer Mengen von Fluorelastomeren die Verarbeitungseigenschaften der erfindungsgemäßen Polymermischungen weiter verbessern können. Solche Fluorelastomere sind als Verarbeitungshilfsmittel als solche bekannt und im Handel z.B. unter den Handelsnamen Viton® und Dynamar® erhältlich (siehe z.B. auch US-A-3125547). Sie werden vorzugsweise in Mengen von 10 bis 1000 ppm, besonders bevorzugt von 20 bis 200 ppm, bezogen auf die Gesamtmasse der erfindungsgemäßen Polymermischung, zugegeben.

Die Herstellung der erfindungsgemäßen Polymermischungen kann nach allen bekannten Verfahren erfolgen. Dies kann beispielsweise durch Zuführung der grießförmigen Komponenten zu einem Granulieraggregat, z.B. einem Zweischneckenkneter (ZSK) oder Farrelkneter, erfolgen. Weiterhin kann auch direkt eine Granulatmischung auf einer Folienherstellanlage verarbeitet werden.

Die erfindungsgemäßen Polymermischungen eignen sich hervorragend zur Herstellung von Folien auf Blasfolien- und Castfilmanlagen bei hohen Ausstoßleistungen. Die Folien aus den erfindungsgemäßen Polymermischungen zeichnen sich durch sehr gute mechanische Eigenschaften, hohe Schockfestigkeit und hohe Reißfestigkeit bei guten optischen Eigenschaften aus. Sie eignen sich insbesondere für den Verpackungsbereich sowohl für hochbeanspruchbare Schwersackverpackungen als auch für den Lebensmittelbereich. Weiterhin zeigen die Folien nur geringe Blockneigung und sind daher auch ohne oder mit nur geringen Gleit- und Antiblockmittelzusätzen maschinengängig.

Die folgenden Beispiele erläutern die Erfindung.

### Beispiele

Aus folgenden Ethylencopolymeren (A) und (B) wurden Granulatmischungen hergestellt:

### Ethylencopolymer (A)

Das Ethylen/Hexen-Copolymer wurde mit einem Metallocenkatalysator in einem Suspensionspolymerisationsverfahren in einem Schleifenreaktor hergestellt und hatte folgende Eigenschaften:

| | |
|---|---|
| MFR (190°C/2,16 kg) | 1,7 g/10 min |
| HLMFR (190°C/21,6 kg) | 26 g/10 min |
| Dichte | 0,917 g/cm³ |
| Hexengehalt | 5,5 Gew.-% |
| M_{w} | 116 000 g/mol |
| Mₙ | 47 000 g/mol |
| M_{w}/Mₙ | 2,5 |

### Ethylencopolymer (B)

Das Ethylen/Hexen-Copolymer (B) wurde mit einem geträgerten Chromkatalysator in einem Gasphasenwirbelschichtpolymerisationsverfahren hergestellt und hatte folgende Eigenschaften:

| | |
|---|---|
| HLMFR (190°C/21,6 kg) | 13 g/10 min |
| Dichte | 0,938 g/cm³ |
| Hexengehalt | 2,5 Gew.-% |
| M_{w} | 233 000 g/mol |
| Mₙ | 23 000 g/mol |
| M_{w}/Mₙ | 10,0 |

Die Ethylencopolymeren (A) und (B) enthielten jeweils 1500 ppm des Verarbeitungsstabilisators Irganox® B 215 (Hersteller: Ciba Geigy) und 50 ppm des Fluorelastomeren Dynamar® FX 9613 (Hersteller: Fa. Dyneon) und wurden als Mischungen in den in der Tabelle 1 angegebenen Gewichtsverhältnissen einer Blasfolienverarbeitungsmaschine zugeführt. Die Blasfolienanlage (Typ Windmöller & Hölscher) hatte einen Schneckendurchmesser von 60 mm, eine Barriereschnecke, einen Düsendurchmesser von 225 mm und eine Düsenspaltweite von 1 mm. Das Aufblasverhältnis betrug 1:2,5. Die Granulatmischungen wurden zu Folien von 40 µm Dicke verarbeitet.

Die Bestimmung der Molmassenverteilungen und der daraus abgeleiteten Mittelwerte Mₙ, M_{w} und M_{z} erfolgte mittels Hochtemperatur-Gelpermeationschromatographie in Anlehnung an DIN 55672.

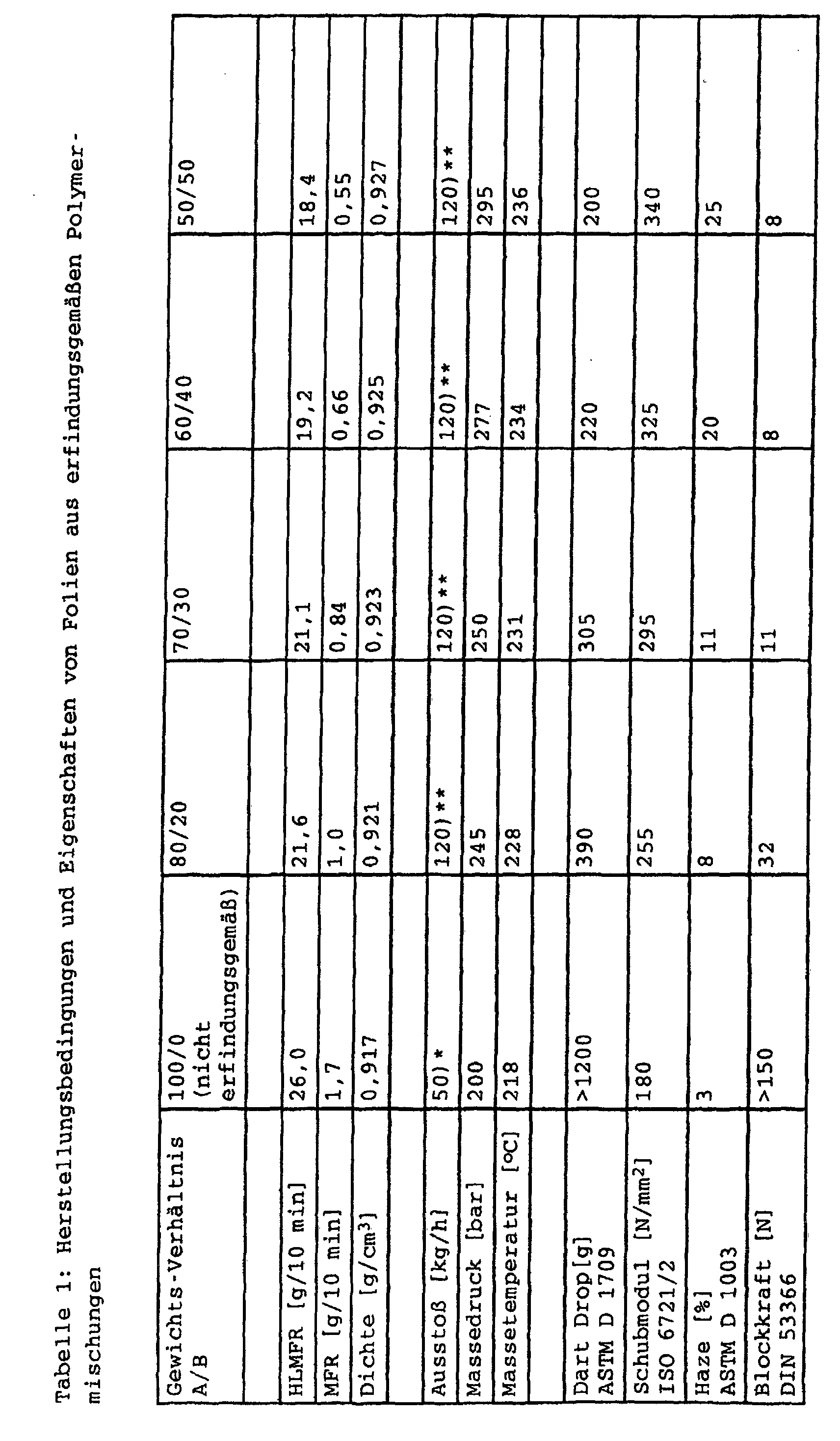

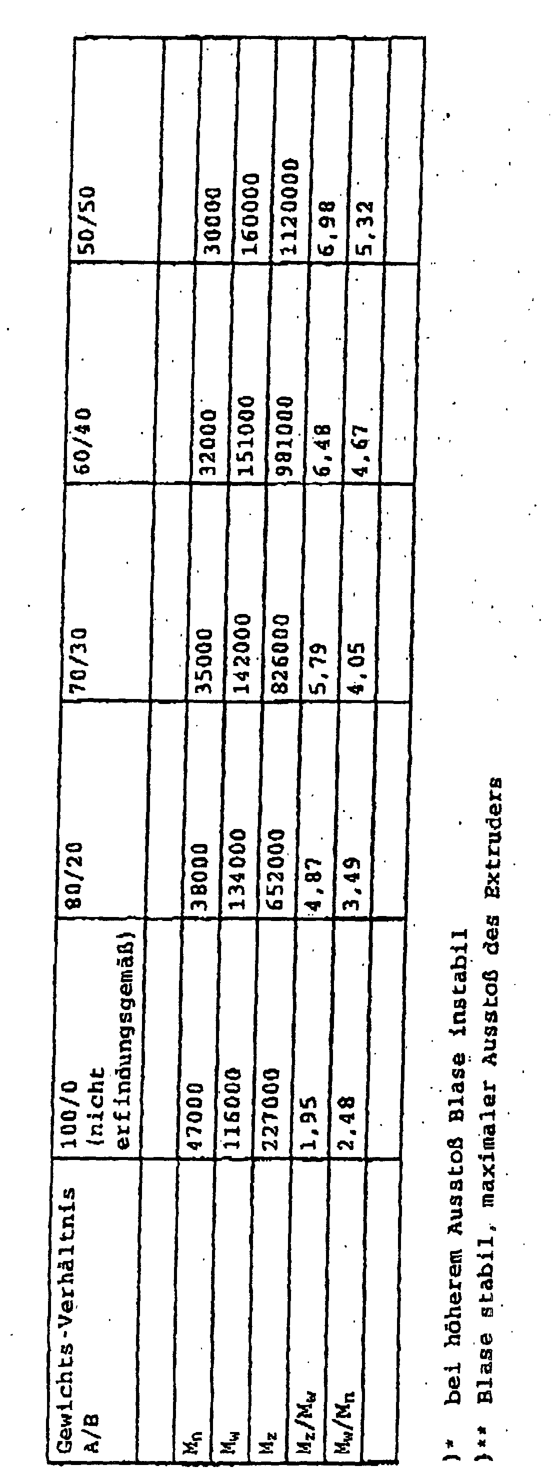

Die Versuche zeigen die vorteilhaften Eigenschaften der erfindungsgemäßen Polymermischungen: Die Mischungen lassen sich ausgezeichnet zu Folien verarbeiten, und zwar mit wesentlich besserem Ausstoß, als es für reines Metallocencopolymer der Fall ist. Dabei weisen die erhaltenen Folien eine hervorragende Kombination von mechanischen und optischen Eigenschaften auf.

## Patentansprüche

1. Polymermischung enthaltend mindestens 40 aber weniger als 85 Gew.-% eines Ethylencopolymeren (A), welches eine Dichte von 0,91 bis 0,93 g/cm³, einen HLMFR (190°C/21,6 kg) von 5 bis 60 g/10 min und eine Molmassenverteilung M_{w}/Mₙ ≤ 3 aufweist, und mehr als 15 aber höchstens 60 Gew.-% eines Ethylencopolymeren (B), welches eine Dichte von 0,93 bis 0,945 g/cm³, einen HLMFR (190°C/21,6 kg) von 8 bis 20 g/10 min und eine Molmassenverteilung M_{w}/Mₙ ≥ 7 aufweist, wobei die Gewichtsprozente jeweils bezogen sind auf die Gesamtmasse der Komponenten (A) und (B).

2. Polymermischung nach Anspruch 1 mit einer Molmassenverteilung M_{w}/Mₙ von 3 bis 7.

3. Polymermischung nach Anspruch 1 mit einer Molmassenverteilung M_{z}/M_{w}, deren Wert gleich oder größer dem Wert (M_{w}/Mₙ) x 1,1 ist.

4. Polymermischung nach Anspruch 1, in welcher das im Ethylencopolymeren (A) und/oder das im Ethylencopolymeren (B) enthaltene Comonomer Hexen ist.

5. Polymermischung nach Anspruch 1, in welcher als Ethylencopolymer (A) ein durch Metallocenkatalyse hergestelltes Ethylen-α-Olefin-copolymer enthalten ist.

6. Polymermischung nach Anspruch 1, in welcher als Ethylencopolymer (B) ein mit Hilfe eines geträgerten Chromkatalysators hergestelltes Ethylen-a-Olefin-copolymer enthalten ist.

7. Polymermischung nach Anspruch 1, welche zusätzlich zu den Ethylencopolymeren (A) und (B) ein Fluorelastomer enthält.

8. Verwendung von Polymermischungen gemäß den Ansprüchen 1 bis 7 zur Herstellung von Folien.

9. Verfahren zur Herstellung von Folien, **dadurch gekennzeichnet, daß** man eine Polymermischung gemäß den Ansprüchen 1 bis 7 einsetzt.

10. Folien hergestellt aus einer Polymermischung gemäß den Ansprüchen 1 bis 7.

## Claims

1. A polymer mixture comprising at least 40 but less than 85% by weight of an ethylene copolymer (A) which has a density of from 0.91 to 0.93 g/cm³, an HLMFR (190°C/21.6 kg) of from 5 to 60 g/10 min and a molar mass distribution M_{w}/Mₙ ≤ 3, and more than 15 but at most 60 % by weight of an ethylene copolymer (B) which has a density of from 0.93 to 0.945 g/cm³, an HLMFR (190°C/21.6 kg) of from 8 to 20 g/10 min and a molar mass distribution M_{w}/Mₙ ≥ 7, where the percentages by weight are in each case based on the total mass of the components (A) and (B).

2. A polymer mixture as claimed in claim 1 having a molar mass distribution M_{w}/Mₙ of from 3 to 7.

3. A polymer mixture as claimed in claim 1 having a molar mass distribution M_{z}/M_{w} whose value is equal to or greater than (M_{w}/Mₙ) x 1.1.

4. A polymer mixture as claimed in claim 1 in which the copolymer present in the ethylene copolymer (A) and/or in the ethylene copolymer (B) is hexene.

5. A polymer mixture as claimed in claim 1 in which the ethylene copolymer (A) present is an ethylene-α-olefin copolymer prepared by means of metallocene catalysis.

6. A polymer mixture as claimed in claim 1 in which the ethylene copolymer (B) present is an ethylene-α-olefin copolymer prepared using a supported chromium catalyst.

7. A polymer mixture as claimed in claim 1 which further comprises a fluoroelastomer in addition to the ethylene copolymers (A) and (B).

8. The use of a polymer mixture as claimed in any of claims 1 to 7 for producing films.

9. A process for producing films, wherein a polymer mixture as claimed in any of claims 1 to 7 is used.

10. A film produced from a polymer mixture as claimed in any of claims 1 to 7.

## Revendications

1. Mélange de polymères contenant au moins 40 % en poids mais moins de 85 % en poids d'un copolymère de l'éthylène (A) ayant une densité de 0,91 à 0,93 g/cm³, une HLMFR (fluidité à l'état fondu sous forte charge) (190° C/21,6kg) de 5 à 60 g/10 minutes et une répartition des masses moléculaires M_{w}/Mₙ ≤ 3, et plus de 15 % en poids mais au maximum 60 % en poids d'un copolymère de l'éthylène (B) ayant une densité de 0,93 à 0,945 g/cm³, une HLMFR (190° C/21,6 kg) de 8 à 20 g/10 minutes et une répartition des masses moléculaires M_{w}/Mₙ ≥ 7, les pourcentages en poids indiqués se rapportant dans les deux cas à la masse totale des composants (A) et (B).

2. Mélange de polymères selon la revendication 1, ayant une répartition des masses moléculaires M_{W}/M_{N} de 3 à 7.

3. Mélange de polymères selon la revendication 1, ayant une répartition des masses moléculaires M_{Z}/M_{W} égale ou supérieure à (M_{W}/M_{N}) x 1,1.

4. Mélange de polymères la selon revendication 1, dans lequel le comonomère contenu dans le copolymère de l'éthylène (A) et dans le copolymère de l'éthylène (B) est l'hexène.

5. Mélange de polymères selon la revendication 1, dans lequel le copolymère de l'éthylène (A) est un copolymère éthylène-alpha-oléfine préparé avec catalyse par un métallocène.

6. Mélange de polymères selon la revendication 1, dans lequel le copolymère de l'éthylène (B) est un copolymère éthylène-alpha-oléfine préparé à l'aide d'un catalyseur au chrome sur support.

7. Mélange de polymères selon la revendication 1, contenant, en plus des copolymères de l'éthylène (A) et (B), un élastomère fluoré.

8. Utilisation des mélanges des polymères selon les revendications 1 à 7 pour la fabrication de feuilles.

9. Procédé pour la fabrication de feuilles, **caractérisé par le fait que** l'on utilise à cet effet un mélange de polymères selon les revendications 1 à 7.

10. Feuilles fabriquées à partir d'un mélange de polymères selon les revendications 1 à 7.
